# EUROPEAN PATENT APPLICATION

(11) **EP 3 873 054 A1**
(43) Date of publication of application: **01.09.2021**
(21) Application number: 20747736.5
(22) Date of filing: 08.01.2020
(51) Int. Cl.: H04L 29/06

(54) **METHOD AND DEVICE FOR PREVENTING NETWORK ATTACKS**

(30) Priority: 01.02.2019 CN 201910105151
(71) Applicant: Huawei Technologies Co., Ltd., Longgang District Shenzhen, Guangdong 518129 (CN)
(72) Inventor: YANG, Zhenxing, Shenzhen, Guangdong 518129 (CN); WANG, Hailin, Shenzhen, Guangdong 518129 (CN); ZHANG, Yaokun, Shenzhen, Guangdong 518129 (CN)
(74) Representative: Thun, Clemens
(86) International application number: PCT/CN2020/070982
(87) International publication number: WO 2020/156081

(57) **Abstract**

This application provides a method for preventing a network attack, including: receiving, by a first network node in a Ethernet virtual private network EVPN, a first packet, where the first packet carries a first media access control MAC address, and the first MAC address is a source MAC address of the first packet; and determining first MAC entry information, where the first MAC entry information includes a correspondence between the first MAC address, an identifier of the first MAC address, and egress port information of the first MAC address, and the identifier of the first MAC address is used to indicate that an egress port corresponding to the first MAC address is a trusted port. This method can reduce a risk that the EVPN breaks down caused by attacking the EVPN by an attacker.

## Description

This application claims priority to Chinese Patent Application No. 201910105151.6, filed with the China National Intellectual Property Administration on February 1, 2019 and entitled "METHOD AND APPARATUS FOR PREVENTING NETWORK ATTACK", which is incorporated by reference in its entirety.

### TECHNICAL FIELD

This application relates to the field of computer, and more specifically, to a method and an apparatus for preventing a network attack.

### BACKGROUND

In an Ethernet virtual personal network (Ethernet virtual personal network, EVPN) established by a plurality of provider edges (provider edge, PE) according to a border gateway protocol (border gateway protocol, BGP), each PE is connected to a plurality of devices through respective ports, and the plurality of devices may include a user device and a service device.

In the EVPN, an attacker may be connected to the EVPN through a PE (for example, a PE 1). In this case, the attacker may obtain a MAC address of the service device by using an address resolution protocol (address resolution protocol, ARP) request, then simulate, by using a simulation technology, a source MAC address carried in a packet of the attacker as the MAC address of the service device, and send the packet to the PE. In this case, the PE locally saves the MAC address simulated by the attacker and records egress port information corresponding to the MAC address. If the PE subsequently receives a packet carrying a destination MAC address that is the simulated MAC address, the PE sends the packet to the attacker by using the egress port information. As a result, MAC addresses in the entire EVPN are disordered, causing a network error and the EVPN to break down.

### SUMMARY

This application provides a method for preventing a network attack. This method can reduce a risk that an EVPN breaks down caused by attacking the EVPN by an attacker.

According to a first aspect, a method for preventing a network attack is provided, and may be used in an Ethernet virtual private network EVPN, where the EVPN includes a plurality of network nodes, and the method is performed by a first network node in the plurality of network nodes. The method includes: receiving a first packet, where the first packet carries a first media access control MAC address, and the first MAC address is a source MAC address of the first packet; and determining first MAC entry information, where the first MAC entry information includes a correspondence between the first MAC address, an identifier of the first MAC address, and egress port information of the first MAC address, and the identifier of the first MAC address is used to indicate that the first MAC address is trusted.

According to the foregoing technical solution, it is checked whether an identifier of a MAC address included in MAC entry information indicates that the MAC address is trusted. If the MAC address is trusted, the MAC entry information is not updated, to avoid updating the MAC entry information based on a data packet sent by an attacker, and reduce a risk that the EVPN breaks down caused by attacking the EVPN by the attacker.

In a possible implementation, the first packet is received from a first port of the first network node, and the determining first MAC entry information includes: determining that the first port is configured as a trusted port; and determining the first MAC entry information based on the first MAC address and the egress port information of the first MAC address.

According to the foregoing technical solution, an important port on a network node is configured as a trusted port. When a data packet is received from the trusted port, it is determined that a MAC address carried in the data packet is trusted. When it is determined that a source MAC address carried in the data packet is trusted, the source MAC address and an identifier of the source MAC address are added to MAC entry information, where the identifier of the source MAC address is used to indicate that the source MAC address is trusted, to avoid updating the MAC entry information based on a data packet sent by an attacker, and reduce a risk that the EVPN breaks down caused by attacking the EVPN by the attacker.

In a possible implementation, the determining the first MAC entry information based on the first MAC address and the egress port information of the first MAC address includes: determining that pre-stored second MAC entry information does not include the first MAC address, or includes the first MAC address but does not include the egress port information of the first MAC address; updating the second MAC entry information; and determining updated second MAC entry information as the first MAC entry information.

According to the foregoing technical solution, an important port on a network node is configured as a trusted port. When a data packet is received from the trusted port, it is determined that a MAC address carried in the data packet is trusted. When it is determined that a source MAC address carried in the data packet is trusted, the source MAC address and an identifier of the MAC address are added to MAC entry information. In this case, it may be further checked whether MAC entry information pre-stored on the network node includes a MAC address that is the same as the source MAC address, or includes a MAC address that is the same as the source MAC address but does not include egress port information of the source MAC address. If the MAC entry information pre-stored on the network node does not include the MAC address that is the same as the source MAC address, the network node may add the source MAC address, an identifier of the source MAC address, and the egress port information of the source MAC address to the MAC entry information. Alternatively, if the MAC entry information includes the MAC address that is the same as the source MAC address but does not include the egress port information of the source MAC address, the network node may add the egress port information of the source MAC address to the MAC entry information, to avoid updating the MAC entry information based on a data packet sent by an attacker, and reduce a risk that the EVPN breaks down caused by attacking the EVPN by the attacker.

In a possible implementation, the determining the first MAC entry information based on the first MAC address and the egress port information of the first MAC address includes: determining that pre-stored second MAC entry information includes the first MAC address and the egress port information of the first MAC address; and determining the second MAC entry information as the first MAC entry information.

According to the foregoing technical solution, an important port on a network node is configured as a trusted port. When a data packet is received from the trusted port, it is determined that a source MAC address carried in the data packet is trusted. When it is determined that the source MAC address carried in the data packet is trusted, the source MAC address and an identifier of the source MAC address are added to MAC entry information. In this case, it may be further checked whether MAC entry information pre-stored on the network node includes a MAC address that is the same as the source MAC address and egress port information of the source MAC address. If the MAC entry information pre-stored on the network node includes the MAC address that is the same as the source MAC address and the egress port information of the source MAC address, the network node may not add the source MAC address and the egress port information of the source MAC address to the MAC entry information, to avoid updating the MAC entry information based on a data packet sent by an attacker, and reduce a risk that the EVPN breaks down caused by attacking the EVPN by the attacker.

In a possible implementation, the first packet is received from a first port of the first network node, and the determining first MAC entry information includes:
determining that the first port is not configured as a trusted port; determining that pre-stored second MAC entry information includes a MAC address that is the same as the first MAC address; determining that an identifier of the MAC address that is the same as the first MAC address indicates that the MAC address is trusted; and determining the second MAC entry information as the first MAC entry information.

According to the foregoing technical solution, an important port on a network node is configured as a trusted port. When a data packet is received from a receive port that is not configured as a trusted port, and a source MAC address carried in the data packet is obtained, the source MAC address and egress port information corresponding to the source MAC address are not directly added to MAC entry information, but it is checked whether the MAC entry information includes a MAC address that is the same as the source MAC address. When the MAC entry information includes the MAC address that is the same as the source MAC address, it is further checked whether an identifier of the MAC address included in the MAC entry information indicates that the MAC address is trusted. If the MAC address is trusted, the MAC entry information is not updated, to avoid updating the MAC entry information based on a data packet sent by an attacker, and reduce a risk that the EVPN breaks down caused by attacking the EVPN by the attacker.

In a possible implementation, the method further includes: sending a second packet to a network node other than the first network node in the EVPN, where the second packet carries the first MAC address and the identifier of the first MAC address.

According to the foregoing technical solution, the network node may send, to a network node other than the first network node in the EVPN, a packet that carries the first MAC address and the identifier of the first MAC address. When the MAC entry information pre-stored in the network node is updated (for example, the first MAC address and the identifier of the first MAC address are added to the MAC entry information), the first MAC address and the identifier of the first MAC address are sent to another network node, so that another network node may update locally stored MAC entry information in time based on the first MAC address and the identifier of the first MAC address, to avoid updating the MAC entry information based on the data packet sent by the attacker, and reduce a risk that the EVPN breaks down caused by attacking the EVPN by the attacker.

In a possible implementation, an identifier of each MAC address included in the second packet is carried in a reserved bit of the second packet.

According to a second aspect, an apparatus for preventing a network attack is provided. The apparatus includes a module that is configured to perform the method in the first aspect or the implementations of the first aspect.

According to a third aspect, an apparatus for preventing a network attack is provided. The apparatus includes: a memory, configured to store a program; and a processor, configured to execute the program stored in the memory. When the program stored in the memory is executed, the processor is configured to perform the method in the first aspect or the implementations of the first aspect.

According to a fourth aspect, a computer readable medium is provided. The computer readable medium stores program code to be executed by a device, and the program code is used to perform the method in the first aspect or the possible implementations of the first aspect.

According to a fifth aspect, a computer program product including an instruction is provided, and when the computer program product is run on a computer, the computer is enabled to perform the method in the first aspect or the possible implementations of the first aspect.

Based on the implementations provided in the foregoing aspects of this application, the implementations may be further combined to provide more implementations.

### BRIEF DESCRIPTION OF DRAWINGS

FIG. 1 is a schematic diagram of a network architecture applicable to an embodiment of this application;
FIG. 2 is a schematic flowchart of a method for preventing a network attack according to an embodiment of this application;
FIG. 3 is a schematic block diagram of an apparatus for preventing a network attack according to an embodiment of this application; and
FIG. 4 is another schematic block diagram of an apparatus for preventing a network attack according to an embodiment of this application.

### DESCRIPTION OF EMBODIMENTS

The following describes technical solutions of this application with reference to accompanying drawings.

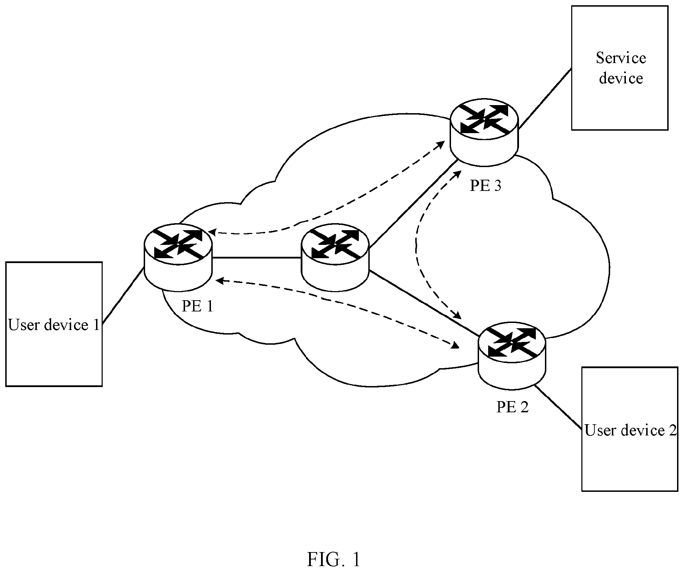

First, a network architecture applicable to this application is described with reference to FIG. 1. FIG. 1 shows an EVPN established by a plurality of network nodes (for example, PEs). For example, a plurality of PEs may establish the EVPN according to a BGP, each PE is connected to a plurality of devices through respective ports, and the plurality of devices may include a user device and a service device.

As shown in FIG. 1, a user device 1 is connected to the EVPN through a PE 1, a user device 2 is connected to the EVPN through a PE 2, and a service device is connected to the EVPN through a PE 3. Information transmission between the user devices and the service device may be performed by the PEs.

For example, the service device may send a data packet to the user device 1 through the PE 2 and the PE 1, and the service device may send a data packet to the user device 2 through the PE 2 and the PE 3.

In the embodiments of this application, to prevent an attacker from attacking the EVPN, some important ports in the EVPN are configured as trusted ports. The trusted port may be a port through which a device that is not considered to attack the EVPN accesses the EVPN. For example, the device that is not considered to attack the EVPN may be an internal server of an enterprise. An untrusted port is a port through which a device that may attack the EVPN accesses the EVPN.

For example, a trust mac enable command line may be added in a configuration mode or a configuration view of a port that communicates with the service device on the network node, to configure some trusty ports on the network node as trusted ports.

It should be understood that the foregoing method for configuring the trusted port is merely an example for description, and does not constitute any limitation on the embodiments of this application. Other methods for configuring the trusted port fall within the protection scope of this application.

In the embodiments of this application, MAC entry information includes at least a correspondence between a MAC address, an identifier of the MAC address, and egress port information of the MAC address. For example, the MAC entry information may include a plurality of entries, and each entry may include a MAC address, an identifier of the MAC address, and egress port information of the MAC address.

The MAC address may be obtained from a received data packet, and the identifier of the MAC address may indicate that the MAC address is trusted. When the MAC address is a source MAC address carried in a data packet received from a trusted port, the MAC address may be marked as a trusted MAC address by using the identifier of the MAC address. In this case, the trusted port may be referred to as a receive port of the data packet corresponding to the MAC address. When the MAC address is a destination MAC address carried in the data packet, the trusted port may be referred to as an egress port of the data packet corresponding to the MAC address, and the egress port information of the MAC address in the MAC entry information may indicate an egress port of the data packet corresponding to the MAC address.

It should be further understood that the foregoing egress port information of the MAC address may include a port number of the egress port. However, this is not limited in this application. Other manners that can indicate the egress port fall within the protection scope of this application.

In the embodiments of this application, the important port is configured as a trusted port, and the identifier of the MAC address is added in the MAC entry information, where the identifier of the MAC address is used to indicate that the MAC address is trusted. When the PE receives a data packet from a receive port that is not configured as a trusted port, and obtains a source MAC address carried in the data packet, the PE does not directly add the source MAC address and egress port information corresponding to the MAC address to the MAC entry information, but checks whether the MAC entry information includes a MAC address that is the same as the source MAC address. When the MAC entry information includes the MAC address that is the same as the source MAC address, it is further checked whether an identifier of the MAC address included in the MAC entry information indicates that the MAC address is trusted. If the MAC address is trusted, the MAC entry information is not updated, to avoid updating the MAC entry information based on a data packet sent by the attacker, and reduce a risk that the EVPN breaks down caused by attacking the EVPN by the attacker.

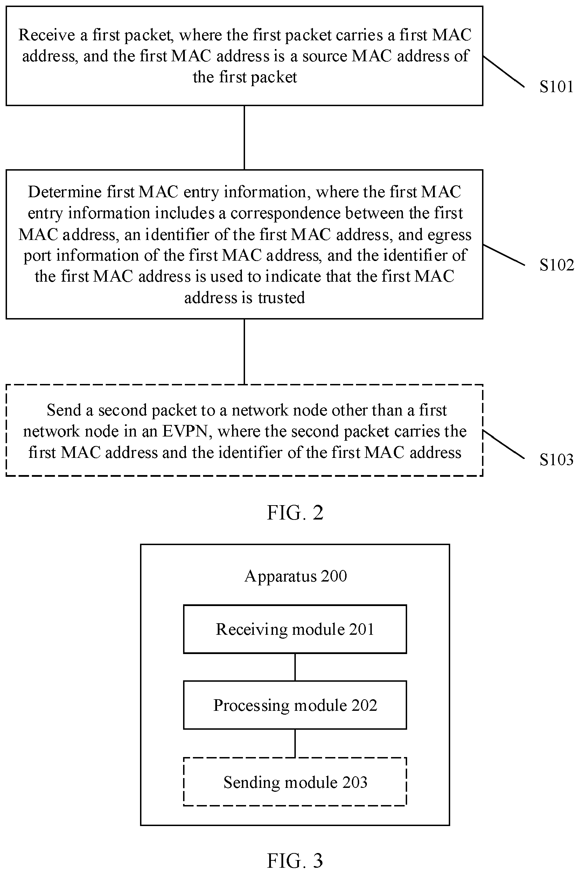

The following describes, with reference to the network architecture shown in FIG. 1, a method for preventing a network attack according to an embodiment of this application. FIG. 2 is a schematic flowchart of a method 100 for preventing a network attack according to an embodiment of this application. The method includes S101 to S101, and may be performed by any network node (for example, a first network node) in FIG. 1.

S101. Receive a first packet, where the first packet carries a first media access control MAC address, and the first MAC address is a source MAC address of the first packet.

S102. Determine first MAC entry information, where the first MAC entry information includes a correspondence between the first MAC address, an identifier of the MAC address, and egress port information of the first MAC address, and the identifier of the first MAC address is used to indicate that an egress port corresponding to the first MAC address is a trusted port.

Specifically, when the first network node (for example, a PE 1) receives a data packet (for example, the first packet), the first network node may determine MAC entry information (for example, the first MAC entry information) based on a receive port (for example, a first port) that receives the first packet.

If there is no pre-stored MAC entry information on the PE 1 before the PE 1 receives the first packet, after receiving the first packet, the PE 1 may determine whether a receive port corresponding to the source MAC address (for example, the first MAC address) carried in the first packet is configured as a trusted port. If the receive port corresponding to the first MAC address is configured as a trusted port, the PE 1 may generate the identifier of the first MAC address, and the identifier of the first MAC address is used to indicate that the first MAC address is trusted. The PE 1 may create MAC entry information (for example, the first MAC entry information), and add the first MAC address, the identifier of the first MAC address, and the egress port information of the first MAC address to the first MAC entry information.

If there is pre-stored MAC entry information (for example, second MAC entry information) on the PE 1 before the PE 1 receives the first packet, the PE 1 determines whether to add the first MAC address and the egress port information of the first MAC address to the second MAC entry information, or whether to add the egress port information of the first MAC address to the second MAC entry information.

When the PE 1 adds the first MAC address and the egress port information of the first MAC address to the second MAC entry information, or when the PE1 adds the egress port information of the first MAC address to the second MAC entry information, the PE 1 updates the second MAC entry information, and determines updated second MAC entry information as the first MAC entry information.

When the PE 1 does not add the first MAC address or the egress port information of the first MAC address to the second MAC entry information, the PE 1 does not update the second MAC entry information, and the second MAC entry information is determined first MAC entry information.

It should be understood that the egress port information of the first MAC address indicates the first port, the first packet is received by the PE 1 from the first port, and the first port may be referred to as the receive port of the first packet. When the first MAC address is a destination MAC address carried in a data packet, the first port may be referred to as an egress port of the data packet. The following describes the method for determining the first MAC entry information provided in this embodiment of this application when there is the pre-stored second MAC entry information on the PE 1 before the PE 1 receives the first packet.

As an example instead of a limitation, the determining the first MAC entry information based on the first port includes: determining that the first port is configured as a trusted port; and determining the first MAC entry information based on the first MAC address and the egress port information of the first MAC address, where the first MAC entry information includes the correspondence between the first MAC address, the identifier of the first MAC address, and the egress port information of the first MAC address.

Specifically, when the PE 1 determines the first MAC entry information, the PE 1 may determine whether the first port is configured as a trusted port. If the first port is configured as a trusted port, the PE 1 determines that the first MAC address and the egress port information of the first MAC address may be added to the second MAC entry information.

When adding the first MAC address and the egress port information of the first MAC address to the second MAC entry information, the PE 1 may determine whether the second MAC entry information includes a MAC address that is the same as the first MAC address.

If the second MAC entry information includes the MAC address that is the same as the first MAC address, and egress port information of the MAC address that is the same as the first MAC address included in the second MAC entry information is different from the egress port information of the first MAC address, the PE 1 updates the second MAC entry information, and the PE 1 may replace the egress port information of the MAC address that is the same as the first MAC address with the egress port information of the first MAC address. For example, the PE 1 may replace, in an entry in which the MAC address that is the same as the first MAC address is located, the egress port information of the MAC address that is the same as the first MAC address with the egress port information of the first MAC address. After updating the second MAC entry information, the PE 1 determines updated second MAC entry information as the first MAC entry information.

If the second MAC entry information does not include the MAC address that is the same as the first MAC address, the PE 1 updates the second MAC entry information, and the PE 1 may add the first MAC address and the egress port information of the first MAC address to the second MAC entry information. For example, the PE 1 may add a new entry to the second MAC entry information, and the new entry is used to record the first MAC address and the egress port information of the first MAC address. In addition, because the first port is a trusted port, the PE 1 may further generate the identifier of the first MAC address, where the identifier of the first MAC address is used to indicate that the first MAC address is trusted, and the PE 1 records the identifier of the first MAC address in the newly added entry. After updating the second MAC entry information, the PE 1 determines updated second MAC entry information as the first MAC entry information.

If the second MAC entry information includes the MAC address that is the same as the first MAC address, and egress port information of the MAC address that is the same as the first MAC address included in the second MAC entry information is the same as the egress port information of the first MAC address, the PE 1 may not update the second MAC entry information, to be specific, determine the second MAC entry information as the first MAC entry information.

As an example instead of a limitation, the determining the first MAC entry information based on the first port includes: determining that the first port is not configured as a trusted port; determining that the pre-stored second MAC entry information includes the MAC address that is the same as the first MAC address; determining that an identifier of the MAC address that is the same as the first MAC address and that is included in the second MAC entry information indicates that the MAC address is trusted; and determining the second MAC entry information as the first MAC entry information.

Specifically, when the PE 1 determines the first MAC entry information, the PE 1 may determine whether the first port is configured as a trusted port. If the first port is not configured as a trusted port, the PE 1 may further determine whether the second MAC entry information includes the MAC address that is the same as the first MAC address.

If the second MAC entry information includes the MAC address that is the same as the first MAC address, the PE 1 further needs to determine whether the identifier of the MAC address that is the same as the first MAC address and that is included in the second MAC entry information indicates that the MAC address is trusted. If the identifier of the MAC address that is the same as the first MAC address and that is included in the second MAC entry information indicates that the MAC address is trusted, the PE 1 does not update the second MAC entry information, to be specific, determines the second MAC entry information as the first MAC entry information.

If the second MAC entry information does not include the MAC address that is the same as the first MAC address, the PE 1 updates the second MAC entry information, and the PE 1 may add the first MAC address and the egress port information of the first MAC address to the second MAC entry information. For example, the PE 1 may add a new entry to the second MAC entry information, and the new entry is used to record the first MAC address and the egress port information of the first MAC address. After updating the second MAC entry information, the PE 1 determines updated second MAC entry information as the first MAC entry information.

It should be understood that when the PE 1 determines whether to add the first MAC address and the egress port information of the first MAC address to the second MAC entry information, or whether to add the egress port information of the first MAC address to the second MAC entry information, a step in which the PE 1 determines whether the first port is configured as a trusted port may be performed before or after another step (for example, the PE 1 determines whether the second MAC entry information includes the first MAC address), and this is not limited in this embodiment of this application.

For example, when the PE 1 determines the first MAC entry information, the PE 1 may determine whether the second MAC entry information includes the MAC address that is the same as the first MAC address. If the second MAC entry information includes the MAC address that is the same as the first MAC address, the PE 1 further needs to determine whether the identifier of the MAC address that is the same as the first MAC address and that is included in the second MAC entry information indicates that the MAC address is trusted. If the identifier of the MAC address that is the same as the first MAC address and that is included in the second MAC entry information indicates that the MAC address is trusted,
the PE 1 may further determine whether the first port is configured as a trusted port. If the first port is not configured as a trusted port, the PE 1 does not update the second MAC entry information, to be specific, determines the second MAC entry information as the first MAC entry information.

In this embodiment of this application, the method 100 may further include S103.

S103. Send a second packet to a network node other than the first network node in the EVPN, where the second packet carries the first MAC address and the identifier of the first MAC address.

Specifically, after the PE 1 determines the first MAC entry information, for example, the PE 1 adds the first MAC address and the identifier of the first MAC address to the second MAC entry information, the PE 1 may send the first MAC address and the identifier of the first MAC address to a network node other than the PE 1 in the EVPN. For example, the PE 1 may send the second packet that carries the first MAC address and the identifier of the first MAC address to a network node other than the PE 1 in the EVPN.

For example, the second packet may be a BGP packet. When sending a newly added MAC address and an identifier of the MAC address, the PE 1 may carry the identifier of the newly added MAC address in a reserved bit in the BGP packet. A distribution of an identifier of a MAC address in a BGP packet may be shown as follows:

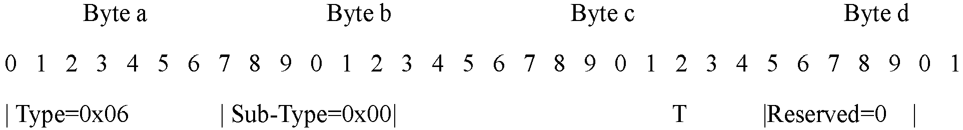

T represents the identifier of the MAC address, and when a value of T is 1, it indicates that the MAC address is trusted.

It should be understood that the foregoing distribution of an identifier of a MAC address in a BGP packet is merely an example for description. In a practical application, the identifier of the MAC address may be further carried in a bit other than the least significant bit in the eight bits of the byte c, and in addition, more than one bit may be used to carry the identifier of the MAC address. This is not particularly limited in this embodiment of this application.

It should be further understood that when a new MAC address and an identifier of the MAC address are added to the second MAC entry information, the PE 1 may send, to another network node, a second packet that carries the MAC address and the identifier of the MAC address, or regardless of whether the new MAC address and the identifier of the MAC address are added, send the second packet that carries a locally stored MAC address and an identifier of the MAC address to another network node in a period of a preset time length, or when a connection is established between network nodes, send the second packet that carries a locally stored MAC address and an identifier of the MAC address to another network node.

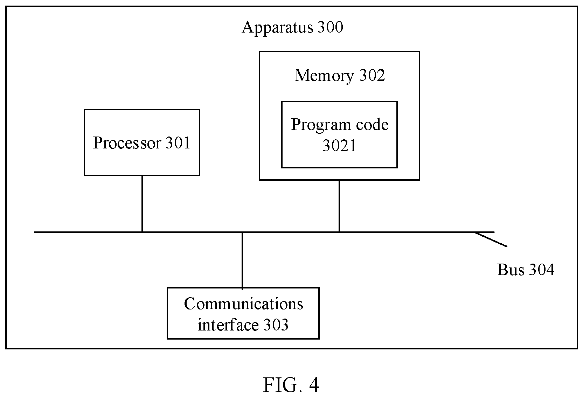

The foregoing describes in detail the method for preventing a network attack provided in the embodiments of this application with reference to FIG. 1 to FIG. 2. The following describes in detail an apparatus for preventing a network attack provided in the embodiments of this application with reference to FIG. 3 and FIG. 4.

FIG. 3 is a schematic block diagram of an apparatus 200 for preventing a network attack according to an embodiment of this application. The apparatus 200 may be configured in an EVPN, and includes: a receiving module 201, configured to receive a first packet, where the first packet carries a first media access control MAC address, and the first MAC address is a source MAC address of the first packet; a processing module 202, configured to determine first MAC entry information, where the first MAC entry information includes a correspondence between the first MAC address, an identifier of the first MAC address, and egress port information of the first MAC address, and the identifier of the first MAC address is used to indicate that the first MAC address is trusted.

Optionally, the first packet is received from a first port of the apparatus, and the processing module 202 is further configured to determine that the first port is configured as a trusted port; and determine the first MAC entry information based on the first MAC address and the egress port information of the first MAC address.

Optionally, the processing module 202 is further configured to determine that the pre-stored second MAC entry information does not include the first MAC address, or includes the first MAC address but does not include the egress port information of the first MAC address; update the second MAC entry information; and determine updated second MAC entry information as the first MAC entry information.

Optionally, the processing module 202 is further configured to determine that the pre-stored second MAC entry information includes the first MAC address and the egress port information of the first MAC address; and determine the second MAC entry information as the first MAC entry information.

Optionally, the first packet is received from a first port of the apparatus, and the processing module 202 is further configured to determine that the first port is not configured as a trusted port; determine that pre-stored second MAC entry information includes a MAC address that is the same as the first MAC address; determine that an identifier of the MAC address that is the same as the first MAC address indicates that the MAC address is trusted; and determine the second MAC entry information as the first MAC entry information.

Optionally, the apparatus further includes a sending module 203, configured to send a second packet to a network node other than the first network node in the EVPN, where the second packet carries the first MAC address and the identifier of the first MAC address.

Optionally, an identifier of each MAC address included in the second packet is carried in a reserved bit of the second packet.

It should be understood that the foregoing functions of the apparatus 200 in this embodiment of this application may be implemented by an application-specific integrated circuit (application-specific integrated circuit, ASIC), or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), or any combination thereof. Alternatively, the method for preventing a network attack shown in FIG. 2 may be implemented by using software. When the method for preventing a network attack shown in FIG. 2 is implemented by using software, the apparatus 200 and modules of the apparatus 200 may alternatively be software modules.

The apparatus 200 according to this embodiment of this application may correspondingly perform the method described in the embodiments of this application. In addition, the foregoing and other operations and/or functions of the units of the apparatus 200 are used to implement the corresponding procedures executed by the first network node in the method shown in FIG. 2. For brevity, details are not described herein again.

FIG. 4 is a schematic block diagram of an apparatus for preventing a network attack according to an embodiment of this application. As shown in FIG. 4, the apparatus 300 includes a processor 301, a memory 302, a communications interface 303, and a bus 304. The processor 301, the memory 302, and the communications interface 303 communicate with each other through the bus 304, or communicate with each other by wireless transmission or by another means. The memory 302 is configured to store an instruction, and the processor 301 is configured to execute the instruction stored in the memory 302. The memory 302 stores program code 3021, and the processor 301 may invoke the program code 3021 stored in the memory 302 to perform the method for preventing a network attack shown in FIG. 2.

In a possible implementation, the processor 301 is configured to invoke the communications interface 303 to perform the following operation: receiving a first packet, where the first packet carries a first MAC address, and the first MAC address is a source MAC address of the first packet.

The processor 301 is further configured to determine first MAC entry information, where the first MAC entry information includes a correspondence between the first MAC address, an identifier of the first MAC address, and egress port information of the first MAC address, and the identifier of the first MAC address is used to indicate that the first MAC address is trusted.

Optionally, the first packet is received from a first port of the apparatus, and the processor 301 is further configured to determine that the first port is configured as a trusted port; and determine the first MAC entry information based on the first MAC address and the egress port information of the first MAC address.

Optionally, the processor 301 is further configured to determine that pre-stored second MAC entry information does not include the first MAC address, or includes the first MAC address but does not include the egress port information of the first MAC address; update the second MAC entry information; and determine updated second MAC entry information as the first MAC entry information.

Optionally, the processor 301 is further configured to determine that the pre-stored second MAC entry information includes the first MAC address and the egress port information of the first MAC address; and determine the second MAC entry information as the first MAC entry information.

Optionally, the first packet is received from a first port of the apparatus, and the processor 301 is further configured to determine that the first port is not configured as a trusted port; determine that pre-stored second MAC entry information includes a MAC address that is the same as the first MAC address; determine that an identifier of the MAC address that is the same as the first MAC address indicates that the MAC address is trusted; and determine the second MAC entry information as the first MAC entry information.

Optionally, the processor 301 is further configured to invoke the communications interface 303 to perform the following operation: sending a second packet to a network node other than the first network node in an EVPN, where the second packet carries the first MAC address and the identifier of the first MAC address.

Optionally, an identifier of each MAC address included in the second packet is carried in a reserved bit of the second packet.

It should be understood that in this embodiment of this application, the processor 301 may be a CPU, or the processor 301 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, any conventional processor, or the like.

The memory 302 may include a read-only memory and a random access memory, and provide an instruction and data to the processor 301. The memory 302 may further include a nonvolatile random access memory. The memory 302 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In addition to a data bus, the bus 304 may further include a power bus, a control bus, a status signal bus, and the like. However, for clear description, various types of buses in FIG. 4 are marked as the bus 304.

It should be understood that the apparatus 300 according to this embodiment of this application may correspond to the apparatus 200 in the embodiments of this application, and may correspond to the first network node in the method shown in FIG. 2 in the embodiments of this application. When the apparatus 300 corresponds to the first network node in the method shown in FIG. 2, the foregoing and other operations and/or functions of the modules of the apparatus 300 are respectively used to implement the steps of the method executed by the first network node shown in FIG. 2. For brevity, details are not described herein again.

All or some of the foregoing embodiments may be implemented by software, hardware, firmware, or any combination thereof. When software is used to implement the embodiments, the foregoing embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for preventing a network attack, wherein the method is used in an Ethernet virtual private network EVPN, the EVPN comprises a plurality of network nodes, and the method is performed by a first network node in the plurality of network nodes and comprises:
receiving a first packet, wherein the first packet carries a first media access control MAC address, and the first MAC address is a source MAC address of the first packet; and
determining first MAC entry information, wherein the first MAC entry information comprises a correspondence between the first MAC address, an identifier of the first MAC address, and egress port information of the first MAC address, and the identifier of the first MAC address is used to indicate that the first MAC address is trusted.

2. The method according to claim 1, wherein the first packet is received from a first port of the first network node, and the determining first MAC entry information comprises:
determining that the first port is configured as a trusted port; and
determining the first MAC entry information based on the first MAC address and the egress port information of the first MAC address.

3. The method according to claim 2, wherein the determining the first MAC entry information based on the first MAC address and the egress port information of the first MAC address comprises:
determining that pre-stored second MAC entry information does not comprise the first MAC address, or comprises the first MAC address but does not comprise the egress port information of the first MAC address;
updating the second MAC entry information; and
determining updated second MAC entry information as the first MAC entry information.

4. The method according to claim 2, wherein the determining the first MAC entry information based on the first MAC address and the egress port information of the first MAC address comprises:
determining that pre-stored second MAC entry information comprises the first MAC address and the egress port information of the first MAC address; and
determining the second MAC entry information as the first MAC entry information.

5. The method according to claim 1, wherein the first packet is received from a first port of the first network node, and the determining first MAC entry information comprises:
determining that the first port is not configured as a trusted port;
determining that pre-stored second MAC entry information comprises a MAC address that is the same as the first MAC address;
determining that an identifier of the MAC address that is the same as the first MAC address indicates that the MAC address is trusted; and
determining the second MAC entry information as the first MAC entry information.

6. The method according to any one of claims 1 to 5, wherein the method further comprises:
sending a second packet to a network node other than the first network node in the EVPN, wherein the second packet carries the first MAC address and the identifier of the first MAC address.

7. The method according to claim 6, wherein an identifier of each MAC address comprised in the second packet is carried in a reserved bit of the second packet.

8. An apparatus for preventing a network attack, wherein the apparatus is configured in an Ethernet virtual private network EVPN and comprises:
a receiving module, configured to receive a first packet, wherein the first packet carries a first media access control MAC address, and the first MAC address is a source MAC address of the first packet; and
a processing module, configured to determine first MAC entry information, wherein the first MAC entry information comprises a correspondence between the first MAC address, an identifier of the first MAC address, and egress port information of the first MAC address, and the identifier of the first MAC address is used to indicate that the first MAC address is trusted.

9. The apparatus according to claim 8, wherein the first packet is received from a first port of the apparatus, and the processing module is further configured to:
determine that the first port is configured as a trusted port; and
determine the first MAC entry information based on the first MAC address and the egress port information of the first MAC address.

10. The apparatus according to claim 9, wherein the processing module is further configured to:
determine that pre-stored second MAC entry information does not comprise the first MAC address, or comprises the first MAC address but does not comprise the egress port information of the first MAC address;
update the second MAC entry information; and
determine updated second MAC entry information as the first MAC entry information.

11. The apparatus according to claim 9, wherein the processing module is further configured to:
determine that pre-stored second MAC entry information comprises the first MAC address and the egress port information of the first MAC address; and
determine the second MAC entry information as the first MAC entry information.

12. The apparatus according to claim 8, wherein the first packet is received from a first port of the apparatus, and the processing module is further configured to:
determine that the first port is not configured as a trusted port;
determine that pre-stored second MAC entry information comprises a MAC address that is the same as the first MAC address;
determine that an identifier of the MAC address that is the same as the first MAC address indicates that the MAC address is trusted; and
determine the second MAC entry information as the first MAC entry information.

13. The apparatus according to any one of claims 8 to 12, wherein the apparatus further comprises:
a sending module, configured to send a second packet to a network node other than the first network node in the EVPN, wherein the second packet carries the first MAC address and the identifier of the first MAC address.

14. The apparatus according to claim 13, wherein an identifier of each MAC address comprised in the second packet is carried in a reserved bit of the second packet.
